# EUROPÄISCHE PATENTSCHRIFT

(11) **EP 3 271 676 B1**
(45) Veröffentlichungstag und Bekanntmachung des Hinweises auf die Patenterteilung: **05.10.2022**
(21) Anmeldenummer: 16721930.2
(22) Anmeldetag: 17.03.2016
(51) Int. Cl.: B60H 1/00, B60H 1/03, F24F 3/147, F28D 9/00, F28D 21/00

(54) **TAUSCHERELEMENT FÜR FAHRGASTKABINE SOWIE MIT DERARTIGEM TAUSCHERELEMENT AUSGESTATTETE FAHRGASTKABINE**
EXCHANGE ELEMENT FOR PASSENGER CABIN AND PASSENGER CABIN EQUIPPED WITH SUCH AN EXCHANGE ELEMENT
ÉLÉMENT D'ÉCHANGE POUR UNE CABINE PASSAGERS ET CABINE PASSAGERS ÉQUIPÉE D'UN TEL ÉLÉMENT D'ÉCHANGE

(30) Priorität: 17.03.2015 CH 3872015; 21.04.2015 CH 5482015; 16.12.2015 CH 1012016
(43) Veröffentlichungstag der Anmeldung: 24.01.2018
(73) Patentinhaber: Zehnder Group International AG, 5722 Gränichen (CH)
(72) Erfinder: HIRSCH, Christian, 08309 Eibenstock (DE)
(74) Vertreter: Rentsch Partner AG
(86) Internationale Anmeldenummer: PCT/IB2016/051512
(87) Internationale Veröffentlichungsnummer: WO 2016/147147

(56) Entgegenhaltungen:
- EP-A1- 0 324 043
- EP-A1- 2 508 814
- EP-A2- 2 444 755
- DE-A1- 1 455 863
- DE-A1- 2 426 946
- DE-A1- 19 756 346
- DE-A1-102010 054 965
- FR-A- 1 165 665
- GB-A- 2 439 557
- JP-A- S6 186 595
- JP-A- 2000 111 279
- US-A1- 2006 153 755
- US-A1- 2009 314 480

## Beschreibung

Die Erfindung bezieht sich auf eine Tauscher-Anordnung, insbesondere für eine Fahrgastkabine eines Fahrzeugs, eines Flugzeugs, eines Schiffs, einer Seilbahn oder eines Aufzugs, insbesondere mit Elektroantrieb oder mit Hybridantrieb oder mit Segelantrieb für Wärmetransport und/oder selektiven Stofftransport zwischen einem ersten Fluid und einem zweiten Fluid gemäß dem Oberbegriff des Anspruchs 1.

Eine derartige Tauscher-Anordnung ist beispielsweise in der JP S61 86595 A beschrieben.

Ein Tauscher-Element einer derartigen Tauscher-Anordnung wird gemäß EP 0 324 043 A1 von einem Rekuperator gebildet.

Die Verwendung eines Wärmetauschers zur Heizung von Fahrgastkabinen ist bekannt. Typischerweise verwendet man die Abwärme eines Verbrennungsmotors, um mittels eines Wärmetauschers die in die Fahrgastkabine eingeleitete Zuluft vorzuwärmen. Bei dieser Verwendung ist man auf die Wärmeenergie angewiesen, die bei der Verbrennung des Treibstoffs in dem Verbrennungsmotor anfällt.

Des weiteren ist die Verwendung einer Klimaanlage zur Konditionierung der Luft in Fahrzeugkabinen bekannt. Typische Anwendungen sind die Trocknung und/oder Kühlung der in die Fahrgastkabine eingeleiteten Zuluft. Auch bei dieser Verwendung ist man auf Energie, die bei der Verbrennung des Treibstoffs in dem Verbrennungsmotor anfällt, für den Betrieb der Klimaanlage angewiesen.

Tauscher-Anordnungen bzw. Tauscherelemente können aus einer Vielzahl aneinandergrenzender lokaler Tauscher-Elemente aufgebaut sein.

Solche Tauscher-Anordnungen sind in zahlreichen Geometrien bekannt. Als Beispiele seien hier Anordnungen mit quaderförmigen Aussenabmessungen oder Tauscher-Anordnungen mit prismenförmigen oder zylinderförmigen Aussenabmessungen bekannt. Meistens werden derartige Anordnungen in grösseren fluidführenden und/oder fluidverteilenden Systemen eingebaut.

Die JP2013139957 zeigt ein Beispiel eines zylinderförmigen Wärmetauschers, der an verschiedene Einbausituationen anpassbar ist.

Die JP61130791 und JP61086596 zeigen jeweils einen Rotationswärmetauscher, der zwei zylinderförmige oder scheibenförmige Wärmetauscherteile enthält, die nebeneinander entlang ihrer gemeinsamen Achse koaxial angeordnet sind und um die gemeinsame Achse relativ zueinander rotierbar sind. Jeder der beiden Wärmetauscherteile ist aus kranzartig zusammengesetzten keilförmigen Elementen aufgebaut. Die beiden Wärmetauscherteile sind entlang ihrer Axialrichtung und entlang ihrer Radialrichtung durchströmbar.

Die DE2045370 zeigt einen Radialstrom-Wärmetauscher, der als Hohlzylinder ausgebildet ist und von seinem inneren Hohlraum durch die Hohlzylinderwand hindurch nach aussen durchströmbar ist.

Die EP0666973 offenbart ein Beispiel eines Wärmetauschers mit aneinandergrenzenden Kanälen in einem Gegenstrombereich. Sowohl die Kanäle für das in einer Richtung durch den Wärmetauscher strömende Fluid als auch die Kanäle für das in einer Gegenrichtung durch den Wärmetauscher strömende Fluid haben einen Querschnitt, der in etwa die Form eines gleichschenkligen Dreiecks hat.

Die EP0720720 offenbart ein weiteres Beispiel eines Wärmetauschers mit aneinandergrenzenden Kanälen in einem Gegenstrombereich. Sowohl die Kanäle für das in einer Richtung durch den Wärmetauscher strömende Fluid als auch die Kanäle für das in einer Gegenrichtung durch den Wärmetauscher strömende Fluid haben einen Querschnitt, der in etwa die Form eines Trapezes hat, dessen Innenwinkel im Bereich von 70° bis 90° liegen.

Die US8235093 offenbart eine Tauscheranordnung für den Transfer von Luftwärme und Luftfeuchtigkeit (Wasserdampf). Diese Tauscheranordnung enthält einen Stapel, in welchem abwechselnd aufeinanderfolgend Membranen und Abstandshalter gestapelt sind. Die Membranen sind jeweils für Wärme und für Wasserdampf durchlässig. Die Abstandshalter bewirken in dem Stapel einerseits einen Abstand zwischen aufeinanderfolgenden Membranen und andererseits eine Führung der Luftströmung in dem Zwischenraum zwischen zwei aufeinander folgenden Membranen. Die Abstandshalter sind in dem Stapel abwechselnd als "linkshändiger" Abstandshalter und als "rechtshändiger" Abstandshalter ausgebildet und definieren in einem jeweiligen Zwischenraum einen Einströmungsbereich, einen Durchströmungsbereich und einen Ausströmungsbereich gemäss einem "S" für den rechtshändigen Abstandshalter bzw. in dem jeweiligen benachbarten Zwischenraum einen Einströmungsbereich, einen Durchströmungsbereich und einen Ausströmungsbereich gemäss einem gespiegelten "S" für den linkshändigen Abstandshalter. In dem Stapel bilden somit benachbarte Zwischenräume jeweils ein lokales Tauscherelement. In diesem grenzen der Einströmungsbereich des jeweiligen Zwischenraums und der Ausströmungsbereich des jeweiligen benachbarten Zwischenraums aneinander, wodurch ein erster Kreuzstrombereich des lokalen Tauscherelements gebildet wird. Ausserdem grenzen in dem lokalen Tauscherelement der Durchströmungsbereich des jeweiligen Zwischenraums und der Durchströmungsbereich des jeweiligen benachbarten Zwischenraums aneinander, wodurch ein Gegenstrombereich des lokalen Tauscherelements gebildet wird. Schliesslich grenzen in dem lokalen Tauscherelement der Ausströmungsbereich des jeweiligen Zwischenraums und der Einströmungsbereich des jeweiligen benachbarten Zwischenraums aneinander, wodurch ein zweiter Gegenstrombereich des lokalen Tauscherelements gebildet wird.

Es gibt dabei Einbau-Situationen, bei denen die erwähnten bekannten Geometrien und Durchströmungsmuster von Tauscher-Anordnungen in einem räumlich begrenzten EinbauVolumen ungeeignet sind.

Der Erfindung liegt die Aufgabe zugrunde, das Beheizen oder Klimatisieren einer Fahrgastkabine mit möglichst geringem oder gar keinem zusätzlichen Energieaufwand zu ermöglichen.

Zur Lösung der Aufgabe ist eine Tauscher-Anordnung gemäß der technischen Lehre des Anspruchs 1 vorgesehen.

Vorzugsweise ist ein Tauscherelement für eine Fahrgastkabine eines Fahrzeugs, eines Flugzeugs, eines Schiffs, einer Seilbahn oder eines Aufzugs bereit gestellt, insbesondere mit Elektroantrieb oder mit Hybridantrieb oder mit Segelantrieb, wobei das Tauscherelement einen Abluft-Strömungsweg sowie einen Zuluft-Strömungsweg aufweist, und wobei der Abluft-Strömungsweg und der Zuluft-Strömungsweg durch Trennwand-Abschnitte voneinander getrennt sind, welche Wärme übertragende Wandbereiche aufweisen, wobei der Abluft-Strömungsweg eine Fluidverbindung vom Innern der Fahrgastkabine zur äusseren Umgebung des Fahrgastkabine bildet, und wobei der Zuluft-Strömungsweg eine Fluidverbindung von der äusseren Umgebung des Fahrgastkabine zum Innern der Fahrgastkabine bildet.

Vorzugsweise ermöglicht das Tauscherelement, einen Teil der Wärmeenergie der aus der Fahrgastkabine austretenden Abluft auf die in die Fahrgastkabine eintretende Zuluft zu übertragen. Dadurch wird auch bei nicht vorhandenem Verbrennungsmotor (reiner Elektroantrieb) oder nicht immer eingeschaltetem Verbrennungsmotor (Hybridantrieb) ein ständiges Warmhalten der Fahrgastkabine im Winter ermöglicht, wobei in der Regel schon die Abwärme des Fahrers/Piloten von etwa 100W ausreicht, um eine angenehme Raumtemperatur in der Fahrgastkabine aufrechtzuerhalten.

Vorzugsweise enthalten die Trennwand-Abschnitte Wasserdampf übertragende Wandbereiche. Das Tauscherelement ermöglicht damit ausserdem, einen Teil der Luftfeuchtigkeit der aus der Fahrgastkabine austretenden Abluft auf die in die Fahrgastkabine eintretende Zuluft zu übertragen. Dies ermöglicht im Winter zusätzlich zur Aufrechterhaltung einer angenehmen Raumtemperatur auch die Aufrechterhaltung einer angenehmen, ausreichend hohen Luftfeuchtigkeit in der Fahrgastkabine.

Bei einer besonders bevorzugten Ausführung enthalten bei dem Tauscherelement die Trennwand-Abschnitte Wandbereiche, die sowohl Wärme als auch Wasserdampf übertragen können. Derartige Wandbereiche enthalten vorzugsweise Polymermembranen, die auf luftdurchlässigen Trägermaterialien aufgetragen sind.

Eine bevorzugte Anwendung betrifft eine Fahrgastkabine eines Fahrzeugs, eines Flugzeugs, eines Schiffs, einer Seilbahn oder eines Aufzugs, insbesondere mit Elektroantrieb oder mit Hybridantrieb oder mit Segelantrieb, wobei die Fahrgastkabine ein Tauscherelement mit einem Abluft-Strömungsweg sowie einem Zuluft-Strömungsweg aufweist, wobei der Abluft-Strömungsweg und der Zuluft-Strömungsweg durch Trennwand-Abschnitte voneinander getrennt sind, welche Wärme übertragende Wandbereiche aufweisen, wobei der Abluft-Strömungsweg eine Fluidverbindung vom Innern der Fahrgastkabine zur äusseren Umgebung des Fahrgastkabine bildet, und wobei der Zuluft-Strömungsweg eine Fluidverbindung von der äusseren Umgebung des Fahrgastkabine zum Innern der Fahrgastkabine bildet.

Vorzugsweise enthalten die Trennwand-Abschnitte Wasserdampf übertragende Wandbereiche.

Besonders bevorzugt enthalten die Trennwand-Abschnitte Wandbereiche, die sowohl Wärme als auch Wasserdampf übertragen können.

In dem Abluft-Strömungsweg und/oder in dem Zuluft-Strömungsweg kann ein Ventilator geschaltet sein, um Abluft entlang des Abluft-Strömungswegs und/oder Zuluft entlang des Zuluft-Strömungswegs zu transportieren.

Vorzugsweise steht der Abluft-Strömungsweg an einem Tiefdruck-Aussenbereich der Fahrgastkabine mit deren äusserer Umgebung in Fluidverbindung. Dadurch kann auch ohne Ventilator die Abluft aus der Fahrgastkabine abgezogen werden.

Vorzugsweise steht der Zuluft-Strömungsweg an einem Hochdruck-Aussenbereich der Fahrgastkabine mit deren äusserer Umgebung in Fluidverbindung. Dadurch kann auch ohne Ventilator die Zuluft in die Fahrgastkabine hineingedrückt werden.

Zweckmässigerweise enthält das Tauscherelement ein elektrisches Heizelement, das von einem dem Elektroantrieb oder dem Hybridantrieb zugeordneten Akkumulator gespeist werden kann. Dieses elektrische Heizelement kann bei Bedarf aktiviert werden, um das Tauscherelement zu erwärmen, falls es zu einem Einfrieren des Tauscherelements kommen sollte.

Selbstverständlich sind das Tauscherelement bzw. die Fahrgastkabine nicht auf den "Winterbetrieb" (tiefe Aussen-Temperatur und geringe Aussen-Luftfeuchtigkeit) beschränkt, bei dem es darum geht, möglichst viel Wärme und ggfs. Wasserdampf von Personen in der Fahrgastkabine zurückzuhalten. Vielmehr eignet sich das Tauscherelement bzw. die Fahrgastkabine auch für den "Sommerbetrieb" (hohe Aussen-Temperatur und hohe Aussen-Luftfeuchtigkeit), bei dem es darum geht, möglichst viel Wärme und ggfs. Wasserdampf von Personen in der Fahrgastkabine fernzuhalten, d.h. die relativ warme und relativ feuchte Zuluft durch die relativ kühle und relativ trockene Abluft vorzukühlen und ggfs. vorzutrocknen.

Erfindungsgemäß bezieht sich die Erfindung auf eine Tauscher-Anordnung und auf ein Tauscher-Element für Wärmetransport und/oder selektiven Stofftransport zwischen einem ersten Fluid und einem zweiten Fluid, insbesondere zur Verwendung als Tauscherelement für eine Fahrgastkabine eines Fahrzeugs, eines Flugzeugs, eines Schiffs, einer Seilbahn oder eines Aufzugs, insbesondere mit Elektroantrieb oder mit Hybridantrieb oder mit Segelantrieb, sowie auf eine mit einem derartigen Tauscherelement ausgestattete Fahrgastkabine.

Gemäss der Erfindung, insbesondere zur Verwendung als Tauscherelement für eine Fahrgastkabine eines Fahrzeugs, eines Flugzeugs, eines Schiffs, einer Seilbahn oder eines Aufzugs, insbesondere mit Elektroantrieb oder mit Hybridantrieb oder mit Segelantrieb, wird **eine Tauscher-Anordnung** bereitgestellt für Wärmetransport und/oder selektiven Stofftransport zwischen einem ersten Fluid und einem zweiten Fluid, welche die Anordnung durchströmen können, wobei die Anordnung aus einer Vielzahl (n) aneinandergrenzender lokaler Tauscher-Elemente (E₁, E₂, ..., Eₙ) aufgebaut ist, dadurch gekennzeichnet, dass die Tauscher-Anordnung zumindest in Teilbereichen die Form eines Zylinders oder eines Segments davon oder die Form eines Prismas mit polygonaler Grundfläche oder eines Segments davon hat.

Mit einer derartigen Aussengeometrie der erfindungsgemässen Tauscher-Anordnung können begrenzte und/oder komplizierte Einbau-Situationen mit wenig Totvolumen ausserhalb der Tauscher-Anordnung bewältigt werden.

Zweckmässigerweise weist die Anordnung einen Gegenstrombereich auf, der sich durch einen besonders stark ausgeprägten Wärmeaustauch und/oder Stoffaustauch zwischen den beiden gegenläufig strömenden Fluiden eignet.

Zweckmässigerweise enthält die Anordnung darüber hinaus einen Kreuzstrombereich. Vorzugsweise enthält die Anordnung in einem Bereich, in welchem das erste Fluid einströmt und das zweite Fluid ausströmt, einen solchen Kreuzstrombereich. Vorzugsweise enthält die Anordnung in einem Bereich, in welchem das zweite Fluid einströmt und das erste Fluid ausströmt, einen solchen Kreuzstrombereich.

Besonders bevorzugt ist es, wenn die Anordnung in dem Bereich, in welchem das erste Fluid einströmt und das zweite Fluid ausströmt, einen ersten solchen Kreuzstrombereich enthält, und in dem Bereich, in welchem das zweite Fluid einströmt und das erste Fluid ausströmt, einen zweiten solchen Kreuzstrombereich enthält.

Bei einer besonders vorteilhaften Ausführung hat die Anordnung im Gegenstrombereich die Form eines Zylinders oder eines Segments davon oder die Form eines Prismas mit polygonaler Grundfläche oder eines Segments davon. Die lokalen Tauscher-Elemente (E₁, E₂, ..., Eₙ) der Anordnung enthalten jeweils einen ersten Kammerbereich, der von dem ersten Fluid von einem ersten Fluid-Eintrittsbereich zu einem ersten Fluid-Austrittsbereich durchströmbar ist, und einen zweiten Kammerbereich, der von dem zweiten Fluid von einem zweiten Fluid-Eintrittsbereich zu einem zweiten Fluid-Austrittsbereich durchströmbar ist, wobei der erste Kammerbereich und der zweite Kammerbereich in einem Angrenzungsbereich aneinander angrenzen und in diesem mittels einer membranartigen Wand voneinander getrennt sind, welche Wärmetransport und/oder selektiven Stofftransport zwischen dem in dem ersten Kammerbereich strömenden ersten Fluid und dem in dem zweiten Kammerbereich strömenden zweiten Fluid ermöglicht.

Der Begriff "Tauscher-Element" steht für eine geometrisch-räumliche Grundeinheit der erfindungsgemässen Tauscher-Anordnung, die zwar prinzipiell alleine funktionsfähig ist, jedoch mit benachbarten Tauscher-Elementen optimal funktioniert.

Insbesondere enthält die Anordnung einen ersten globalen Fluid-Eintrittsbereich und einen ersten globalen Fluid-Austrittsbereich sowie einen zweiten globalen Fluid-Eintrittsbereich und einen zweiten globalen Fluid-Austrittsbereich, wobei die Anordnung von dem ersten Fluid von dem ersten globalen Fluid-Eintrittsbereich zu dem ersten globalen Fluid-Austrittsbereich durchströmbar ist sowie von dem zweiten Fluid von dem zweiten globalen Fluid-Eintrittsbereich zu dem zweiten globalen Fluid-Austrittsbereich durchströmbar ist. Ein lokales Element (Eᵢ) enthält dabei jeweils einen ersten lokalen Kammerbereich (K₁), der von dem ersten Fluid von einem ersten lokalen Fluid-Eintrittsbereich zu einem ersten lokalen Fluid-Austrittsbereich durchströmbar ist, und einen zweiten lokalen Kammerbereich (K₂), der von dem zweiten Fluid von einem zweiten lokalen Fluid-Eintrittsbereich zu einem zweiten lokalen Fluid-Austrittsbereich durchströmbar ist.

Insbesondere gilt dabei:
1) Der erste lokale Kammerbereich (K₁)und der zweite lokale Kammerbereich (K₂) eines lokalen Elements (Eᵢ) grenzen dabei in einem Angrenzungsbereich (Mᵢ; Pᵢ) innerhalb des jeweiligen Elements (Eᵢ) aneinander.
2) Der erste lokale Kammerbereich (K₁) des lokalen Elements (Eᵢ) und der zweite lokale Kammerbereich (K₂) eines ersten lokalen Nachbarelements (Eᵢ₋₁) grenzen in einem Angrenzungsbereich (Mᵢ₋₁; Pᵢ₋₁) zwischen dem lokalen Element (Eᵢ) und dem ersten lokalen Nachbarelement (Eᵢ₋₁) aneinander.
3) Der zweite lokale Kammerbereich (K₂) des Elements (Eᵢ) und der erste lokale Kammerbereich (K₁) eines zweiten lokalen Nachbarelements (Ei+i) grenzen in einem Angrenzungsbereich (Mᵢ₊₁; Pᵢ₊₁) zwischen dem Element (Eᵢ) und dem zweiten Nachbarelement (Eᵢ₊₁) aneinander.
4) Es sind aneinandergrenzende lokale Kammerbereiche innerhalb eines Elements und von Element zu Element in dem jeweiligen Angrenzungsbereich mittels einer membranartigen Wand voneinander getrennt, welche jeweils Wärmetransport und/oder selektiven Stofftransport zwischen dem in dem ersten lokalen Kammerbereich (K₁) strömenden ersten Fluid und dem in dem zweiten lokalen Kammerbereich (K₂) strömenden zweiten Fluid ermöglicht.
5) Die Gesamtheit der ersten lokalen Fluid-Eintrittsbereiche derTauscher-Elemente bildet den ersten globalen Fluid-Eintrittsbereich der Tauscher-Anordnung.
6) Die Gesamtheit der zweiten lokalen Fluid-Eintrittsbereiche der Tauscher-Elemente bildet den zweiten globalen Fluid-Eintrittsbereich der Tauscher-Anordnung.
7) Die Gesamtheit der ersten lokalen Fluid-Austrittsbereiche der Tauscher-Elemente bildet den ersten globalen Fluid-Austrittsbereich der Tauscher-Anordnung.
8) Die Gesamtheit der zweiten lokalen Fluid-Austrittsbereiche der Tauscher-Elemente bildet den zweiten globalen Fluid-Austrittsbereich der Tauscher-Anordnung.

Erfindungsgemäß sind bei der Tauscher-Anordnung die lokalen Tauscher-Elemente (E₁, E₂, ..., Eₙ) zumindest in Teilbereichen der Anordnung, in welchen die Anordnung die Form eines Zylinders oder eines Segments davon oder die Form eines Prismas mit polygonaler Grundfläche oder eines Segments davon hat, **keilförmig** ausgebildet. Sie werden dabei räumlich jeweils begrenzt von einer ersten Keilfläche und einer davon beabstandeten und dazu geneigten zweiten Keilfläche, einer ersten Seitenfläche und einer davon beabstandeten zweiten Seitenfläche sowie einer ersten Stirnfläche und einer davon beabstandeten zweiten Stirnfläche, welche grösser als die erste Stirnfläche ist. Dies ermöglicht den Aufbau der erfindungsgemässen Tauscher-Anordnungen mit nur einer Sorte von Tauscher-Elementen.

Vorzugsweise ist mindestens ein Bereich der Anordnung als Gegenstrombereich ausgebildet, bei welchem zumindest zueinander benachbarte Kanäle parallel zueinander verlaufen. Unter "Gegenstrombereich" sollen dabei einerseits Geometrien mit globaler Parallelität verstanden werden, d.h. zueinander parallele Kanäle innerhalb des gesamten Gegenstrombereichs. Andererseits sollen darunter auch Geometrien mit lokaler Parallelität verstanden werden, d.h. zueinander annähernd parallele benachbarte Kanäle, wobei jedoch innerhalb des gesamten Gegenstrombereichs nicht alle Kanäle zueinander parallel verlaufen und wobei insbesondere die Abweichung von der Parallelität zwischen zwei Kanälen des Gegenstrombereichs, d.h. der Winkel zwischen der Richtung zweier Kanäle, umso grösser ist je weiter die beiden Kanäle innerhalb des Gegenstrombereichs voneinander entfernt sind.

Die Kanäle des Gegenstrombereichs der Tauscher-Anordnung können mehreckförmige Querschnittsflächen haben. Vorzugsweise haben die Kanäle des Gegenstrombereichs dabei Querschnittsflächen in Form eines regelmässigen Vierecks, insbesondere in Form eines Trapezes einer Raute oder eines Rechtecks. Alternativ können die Kanäle des Gegenstrombereichs auch Querschnittsflächen in Form eines regelmässigen Dreiecks, insbesondere in Form eines gleichschenkligen oder eines gleichseitigen Dreiecks haben. Alternativ können die Kanäle des Gegenstrombereichs auch Querschnittsflächen in Form eines regelmässigen Sechsecks oder regelmässigen Achtecks haben.

Erfindungsgemäß ist das Tauscher-Element **keilförmig** ausgebildet und wird räumlich begrenzt von einer ersten Keilfläche und einer davon beabstandeten und dazu geneigten zweiten Keilfläche, einer ersten Seitenfläche und einer davon beabstandeten zweiten Seitenfläche sowie einer ersten Stirnfläche und einer davon beabstandeten zweiten Stirnfläche, welche grösser als die erste Stirnfläche ist. Mit derartigen keilförmigen Tauscher-Elementen lassen sich erfindungsgemässen Tauscher-Anordnungen mit nur einer Sorte von Tauscher-Elementen aufbauen.

Erfindungsgemäß sind ein erster Fluid-Eintrittsbereich sowie ein zweiter Fluid-Austrittsbereich an der ersten Stirnfläche angeordnet und ein zweiter Fluid-Eintrittsbereich sowie ein erster Fluid-Austrittsbereich an der zweiten Stirnfläche angeordnet. Dies ist für eine radiale Durchströmung zylindrischer oder partiell zylindrischer sowie prismatischer oder partiell prismatischer Tauscher-Anordnungen geeignet.

Vorzugsweise sind der erste Fluid-Eintrittsbereich und der zweite Fluid-Austrittsbereich als ein erster Kreuzstrombereich ausgebildet und der zweite Fluid-Eintrittsbereich und der erste Fluid-Austrittsbereich als ein zweiter Kreuzstrombereich ausgebildet.

Bei einer bevorzugten Anwendung, insbesondere zur Verwendung als Tauscherelement für eine Fahrgastkabine eines Fahrzeugs, eines Flugzeugs, eines Schiffs, einer Seilbahn oder eines Aufzugs, insbesondere mit Elektroantrieb oder mit Hybridantrieb oder mit Segelantrieb, wird **eine Tauscher-Anordnung** bereitgestellt für Wärmetransport und/oder selektiven Stofftransport zwischen einem ersten Fluid und einem zweiten Fluid, welche die Anordnung durchströmen können, wobei die Anordnung aus einer Vielzahl (n) aneinandergrenzender lokaler Tauscher-Elemente (E₁, E₂, ..., Eₙ) aufgebaut ist, dadurch gekennzeichnet, dass die Tauscher-Anordnung zumindest in einem Teilbereich die Form eines Zylindersegments oder die Form eines Prismensegments aufweist.

Mit einer derartigen Aussengeometrie der Tauscher-Anordnung können begrenzte und/oder komplizierte Einbau-Situationen mit wenig Totvolumen ausserhalb der Tauscher-Anordnung bewältigt werden.

Vorzugsweise ist das Zylindersegment oder das Prismensegment räumlich durch mindestens eine Schnittebene begrenzt, welche parallel zur Längsachse eines Zylinders bzw. eines Prismas verläuft. Ein derartiges Zylindersegment oder Prismensegment kann neben seinen Stirnflächen eine oder mehrere ebene Seitenflächen haben.

Alternativ oder ergänzend kann das Zylindersegment oder das Prismensegment räumlich durch mindestens eine Zylindermantelfläche begrenzt sein, deren Erzeugende parallel zur Längsachse eines Zylinders bzw. eines Prismas verläuft. Ein derartiges Zylindersegment oder Prismensegment kann neben seinen Stirnflächen eine oder mehrere gekrümmte Seitenflächen haben.

Alternativ oder ergänzend kann das Zylindersegment oder das Prismensegment räumlich durch mindestens eine Polygonmantelfläche begrenzt sein, deren Mantelebenen parallel zur Längsachse eines Zylinders bzw. eines Prismas verlaufen. Ein derartiges Zylindersegment oder Prismensegment kann neben seinen Stirnflächen eine oder mehrere abschnittsweise ebene Seitenflächen haben.

Bei einer bevorzugten Anwendung ist das Element ein **keilförmiges** Volumenelement bzw. keilförmig ausgebildet und wird räumlich begrenzt von einer ersten Keilfläche und einer davon beabstandeten und dazu geneigten zweiten Keilfläche, einer ersten Seitenfläche und einer davon beabstandeten zweiten Seitenfläche sowie einer ersten Stirnfläche und einer davon beabstandeten zweiten Stirnfläche, welche grösser als die erste Stirnfläche ist.

Dabei kann ein erster Fluid-Eintrittsbereich sowie ein zweiter Fluid-Austrittsbereich an der ersten Seitenfläche des Elements angeordnet sein und ein zweiter Fluid-Eintrittsbereich sowie ein erster Fluid-Austrittsbereich an der zweiten Seitenfläche angeordnet sein. Dies ist für eine radiale Durchströmung partiell zylindrischer und/oder partiell prismatischer Tauscher-Anordnungen geeignet.

Alternativ kann dabei ein erster Fluid-Eintrittsbereich sowie ein zweiter Fluid-Austrittsbereich an der ersten Stirnfläche angeordnet sein und ein zweiter Fluid-Eintrittsbereich sowie ein erster Fluid-Austrittsbereich an der zweiten Stirnfläche angeordnet sein. Dies ist für eine radiale Durchströmung partiell zylindrischer und/oder partiell prismatischer Tauscher-Anordnungen geeignet.

Vorzugsweise sind der erste Fluid-Eintrittsbereich und der zweite Fluid-Austrittsbereich als ein erster Kreuzstrombereich ausgebildet und der zweite Fluid-Eintrittsbereich und der erste Fluid-Austrittsbereich als ein zweiter Kreuzstrombereich ausgebildet.

Dabei können ein erster Fluid-Eintrittsbereich sowie ein zweiter Fluid-Austrittsbereich an der ersten Stirnfläche angeordnet sein und ein zweiter Fluid-Eintrittsbereich sowie ein erster Fluid-Austrittsbereich an der zweiten Stirnfläche angeordnet sein. Dies ist für eine radiale Durchströmung partiell zylindrischer und/oder partiell prismatischer Tauscher-Anordnungen geeignet.

Alternativ können dabei ein erster Fluid-Eintrittsbereich sowie ein zweiter Fluid-Austrittsbereich an der ersten Seitenfläche angeordnet sein und ein zweiter Fluid-Eintrittsbereich sowie ein erster Fluid-Austrittsbereich an der zweiten Seitenfläche angeordnet sein. Dies ist für eine axiale Durchströmung partiell zylindrischer und/oder partiell prismatischer Tauscher-Anordnungen geeignet.

Vorzugsweise sind der erste Fluid-Eintrittsbereich und der zweite Fluid-Austrittsbereich als ein erster Kreuzstrombereich ausgebildet und der zweite Fluid-Eintrittsbereich und der erste Fluid-Austrittsbereich als ein zweiter Kreuzstrombereich ausgebildet.

Vorzugsweise ist mindestens ein Bereich des Elements als Gegenstrombereich ausgebildet ist, bei welchem zumindest zueinander benachbarte Kanäle parallel zueinander verlaufen. Unter "Gegenstrombereich" sollen dabei einerseits Geometrien mit globaler Parallelität verstanden werden, d.h. zueinander parallele Kanäle innerhalb des gesamten Gegenstrombereichs. Andererseits sollen darunter auch Geometrien mit lokaler Parallelität verstanden werden, d.h. zueinander annähernd parallele benachbarte Kanäle, wobei jedoch innerhalb des gesamten Gegenstrombereichs nicht alle Kanäle zueinander parallel verlaufen und wobei insbesondere die Abweichung von der Parallelität zwischen zwei Kanälen des Gegenstrombereichs, d.h. der Winkel zwischen der Richtung zweier Kanäle, umso grösser ist je weiter die beiden Kanäle innerhalb des Gegenstrombereichs voneinander entfernt sind.

Die Kanäle des Gegenstrombereichs des Tauscher-Elements können mehreckförmige Querschnittsflächen haben. Vorzugsweise haben die Kanäle des Gegenstrombereichs dabei Querschnittsflächen in Form eines regelmässigen Vierecks, insbesondere in Form eines Trapezes einer Raute oder eines Rechtecks. Alternativ können die Kanäle des Gegenstrombereichs auch Querschnittsflächen in Form eines regelmässigen Dreiecks, insbesondere in Form eines gleichschenkligen oder eines gleichseitigen Dreiecks haben. Alternativ können die Kanäle des Gegenstrombereichs auch Querschnittsflächen in Form eines regelmässigen Sechsecks oder regelmässigen Achtecks haben.

Weitere Vorteile, Merkmale und Anwendungsmöglichkeiten der Erfindung ergeben sich anhand der beigefügten, nicht einschränkend aufzufassenden Zeichnung. Es zeigen:
Fig. 1 ein erstes Ausführungsbeispiel einer erfindungsgemässen Tauscher-Anordnung in einer Perspektivansicht sowie in teilweise aufgeschnittenem Zustand.
Fig. 2 ein zweites Ausführungsbeispiel einer erfindungsgemässen Tauscher-Anordnung in einer Perspektivansicht sowie in teilweise aufgeschnittenem Zustand.
Fig. 3 ein drittes Ausführungsbeispiel einer erfindungsgemässen Tauscher-Anordnung in einer Perspektivansicht sowie in teilweise aufgeschnittenem Zustand.
Fig. 4 ein viertes Ausführungsbeispiel einer erfindungsgemässen Tauscher-Anordnung in einer Perspektivansicht sowie in einer Draufsicht auf eine Stirnfläche der Tauscher-Anordnung.

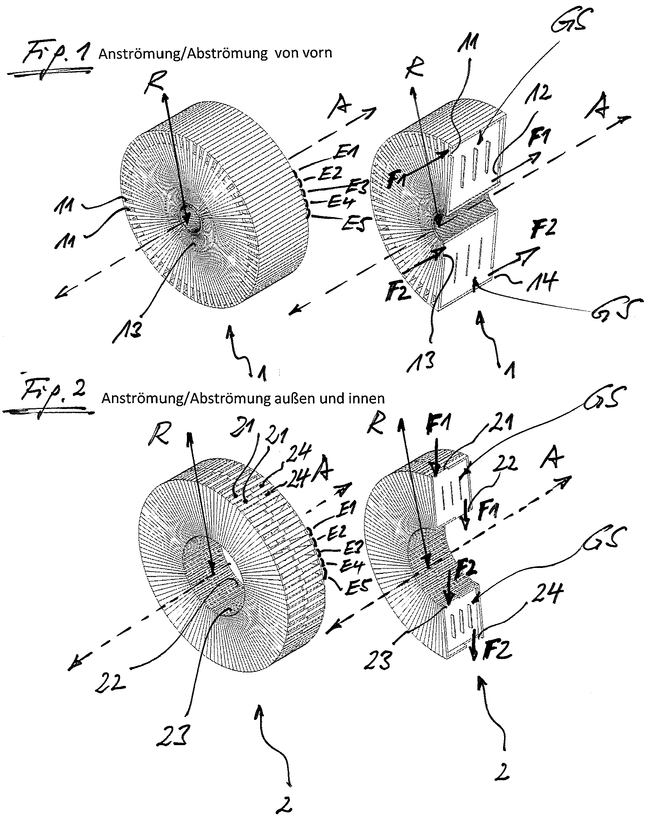

In **Fig.** 1 ist ein erstes Ausführungsbeispiels der erfindungsgemässen Tauscher-Anordnung 1 in einer Perspektivansicht sowie in teilweise aufgeschnittenem Zustand gezeigt. Man erkennt eine Tauscher-Anordnung 1 mit Hohlzylinder-Geometrie und Rotationssymmetrie bezüglich einer Hohlzylinder-Achse, welche eine Axialrichtung definiert, die als Doppelpfeil A angedeutet ist. Entsprechend ist eine Radialrichtung als Doppelpfeil R angedeutet. Die Tauscher-Anordnung 1 hat an ihrer ersten Stirnseite entlang eines radial äusseren Bereichs entlang der Umfangsrichtung gleichmässig verteilte Eintrittsöffnungen 11 für das erste Fluid F1 und an ihrer zweiten Stirnseite entlang eines radial inneren Bereichs entlang der Umfangsrichtung gleichmässig verteilte Austrittsöffnungen 12 für das erste Fluid F1. Ausserdem hat die Tauscher-Anordnung 1 hat an ihrer ersten Stirnseite entlang eines radial inneren Bereichs entlang der Umfangsrichtung gleichmässig verteilte Eintrittsöffnungen 13 für das zweite Fluid F2 und an ihrer zweiten Stirnseite entlang eines radial äusseren Bereichs entlang der Umfangsrichtung gleichmässig verteilte Austrittsöffnungen 14 für das zweite Fluid F2.

In **Fig. 2** ist ein zweites Ausführungsbeispiels der erfindungsgemässen Tauscher-Anordnung 2 in einer Perspektivansicht sowie in teilweise aufgeschnittenem Zustand gezeigt. Man erkennt wiederum eine Tauscher-Anordnung 2 mit Hohlzylinder-Geometrie und Rotationssymmetrie bezüglich einer Hohlzylinder-Achse, welche eine Axialrichtung definiert, die als Doppelpfeil A angedeutet ist. Entsprechend ist eine Radialrichtung als Doppelpfeil R angedeutet. Die Tauscher-Anordnung 2 hat an ihrer äusseren Mantelfläche in einem axialen Bereich nahe der ersten Stirnfläche entlang der Umfangsrichtung gleichmässig verteilte Eintrittsöffnungen 21 für das erste Fluid F1 und an ihrer inneren Mantelfläche in einem axialen Bereich nahe der zweiten Stirnfläche entlang der Umfangsrichtung gleichmässig verteilte Austrittsöffnungen 22 für das erste Fluid F1. Ausserdem hat die Tauscher-Anordnung 2 hat an ihrer inneren Mantelfläche in einem axialen Bereich nahe der ersten Stirnfläche entlang der Umfangsrichtung gleichmässig verteilte Eintrittsöffnungen 23 für das zweite Fluid F2 und an ihrer äusseren Mantelfläche in einem axialen Bereich nahe der zweiten Stirnfläche entlang der Umfangsrichtung gleichmässig verteilte Austrittsöffnungen 24 für das zweite Fluid F2.

Man erkennt in **Fig. 1** und **Fig. 2** einen Gegenstrombereich GS in der Tauscher-Anordnung 1 bzw. in der Tauscher-Anordnung 2 mit Hohlzylinder-Geometrie. In diesem Gegenstrombereich GS verläuft die Hauptströmung in radialer Richtung. Unter "Hauptströmung" versteht sich derjenige Teil der die Tauscher-Anordnung durchströmenden Strömung, in welchem ein Grossteil, vorzugsweise mehr als 60%, noch bevorzugter mehr als 80% des in der Tauscher-Anordnung erfolgenden Energie-Austausches zwischen dem ersten Fluid F1 und dem zweiten Fluid F2 stattfindet.

In **Fig. 1** erfolgen die Anströmung von Fluid F1 und Fluid F2 über Öffnungen 11 radial aussen bzw. über Öffnungen 13 radial innen jeweils an der ersten Stirnfläche der hohlzylinderförmigen Tauscher-Anordnung 1, die Durchströmung im Gegenstrombereich GS in radialer Richtung im Innern der hohlzylinderförmigen Tauscher-Anordnung 1 und die Abströmung von Fluid F1 und Fluid F2 über Öffnungen 12 radial innen bzw. über Öffnungen 14 radial aussen jeweils an der zweiten Stirnfläche der hohlzylinderförmigen Tauscher-Anordnung 1.

In **Fig.** 2 erfolgen die Anströmung von Fluid F1 und Fluid F2 über Öffnungen 21 an der äusseren Mantelfläche bzw. über Öffnungen 23 an der inneren Mantelfläche jeweils axial nahe bei der ersten Stirnseite der hohlzylinderförmigen Tauscher-Anordnung 2, die Durchströmung im Gegenstrombereich GS in radialer Richtung im Innern der hohlzylinderförmigen Tauscher-Anordnung 2 und die Abströmung von Fluid F1 und Fluid F2 über Öffnungen 22 an der inneren Mantelfläche bzw. über Öffnungen 24 an der äusseren Mantelfläche jeweils axial nahe bei der zweiten Stirnseite der hohlzylinderförmigen Tauscher-Anordnung 2.

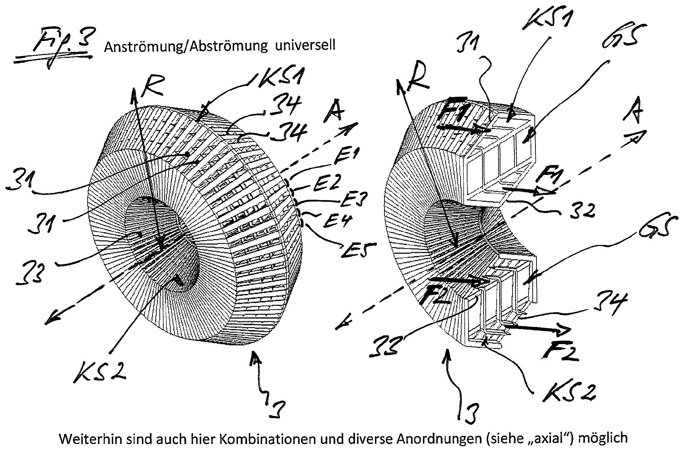

In **Fig. 3** ist ein drittes Ausführungsbeispiels der erfindungsgemässen Tauscher-Anordnung 3 in einer Perspektivansicht sowie in teilweise aufgeschnittenem Zustand gezeigt. Man erkennt eine Tauscher-Anordnung 3 mit Rotationssymmetrie bezüglich einer Achse, welche eine Axialrichtung definiert, die als Doppelpfeil A angedeutet ist. Entsprechend ist eine Radialrichtung als Doppelpfeil R angedeutet. Die Tauscher-Anordnung 3 enthält einen Gegenstrombereich GS, der die Form eines Hohlzylinders hat, sowie einen sich an die äussere Mantelfläche des Gegenstrom-Hohlzylinders anschliessenden ersten Kreuzstrombereich KS1 und einen sich an die innere Mantelfläche des Gegenstrom-Hohlzylinders anschliessenden zweiten Kreuzstrombereich KS2. In dem Gegenstrombereich GS strömt das erste Fluid F1 radial von aussen nach innen und das zweite Fluid F2 radial von innen nach aussen. In den beiden Kreuzstrombereichen KS1 und KS2 strömen das erste Fluid F1 und das zweite Fluid F2 über Kreuz. Der Kreuzungswinkel zwischen dem ersten Fluid F1 und dem zweiten Fluid F2 liegt vorzugsweise im Bereich von 160° und 90°; bezogen auf 180° für Gegenstrom (antiparallel), 90° für reinen Kreuzstrom ohne Gegenstrom- oder Gleichstrom-Komponente und 0° für Gleichstrom (parallel). Die Tauscher-Anordnung 3 hat an ihrem ersten, radial äusseren Kreuzstrombereich KS1 an dessen zur ersten Stirnseite weisenden Seite entlang eines radial äusseren Bereichs entlang der Umfangsrichtung gleichmässig verteilte Eintrittsöffnungen 31 für das erste Fluid F1 und an ihrem zweiten, radial inneren Kreuzstrombereich KS2 an dessen zur zweiten Stirnseite weisenden Seite entlang eines radial inneren Bereichs entlang der Umfangsrichtung gleichmässig verteilte Austrittsöffnungen 32 für das erste Fluid F1. Ausserdem hat die Tauscher-Anordnung 3 hat an ihrem zweiten, radial inneren Kreuzstrombereich KS2 an dessen zur ersten Stirnseite weisenden Seite entlang eines radial inneren Bereichs entlang der Umfangsrichtung gleichmässig verteilte Eintrittsöffnungen 33 für das zweite Fluid F2 und an ihrem ersten, radial äusseren Kreuzstrombereich KS1 an dessen zur zweiten Stirnseite weisenden Seite entlang eines radial äusseren Bereichs entlang der Umfangsrichtung gleichmässig verteilte Austrittsöffnungen 34 für das zweite Fluid F2.

In **Fig. 3** erkennt man an der äusseren und der inneren Mantelseite des Hohlzylinders angebrachte Kreuzstrombereiche KS1 bzw. KS2. Der Kreuzstrombereich KS1 bildet einen Fluid-Eintrittsbereich für das erste Fluid F1 und einen Fluid-Austrittsbereich für das zweite Fluid F2. Der Kreuzstrombereich KS2 bildet einen Fluid-Eintrittsbereich für das zweite Fluid F2 und einen Fluid-Austrittsbereich für das erste Fluid F1. Zwischen dem radial äusseren Kreuzstrombereich KS1 und dem radial inneren Kreuzstrombereich KS2 erstreckt sich entlang der Strömungsrichtung der die Tauscher-Anordnung durchströmenden beiden Fluide ein **radialer Gegenstrombereich,** in welchem das erste Fluid F1 und das zweite Fluid F2 entgegengesetzt zueinander strömen.

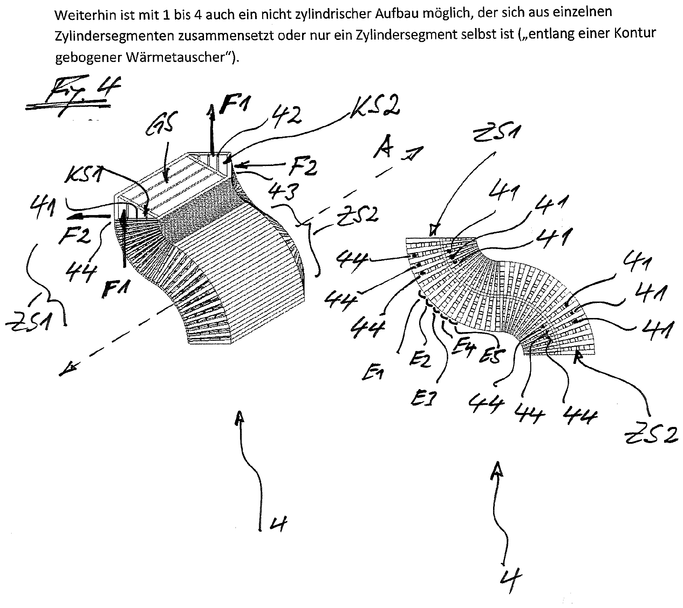

In **Fig. 4** ist ein viertes Ausführungsbeispiel einer erfindungsgemässen Tauscher-Anordnung 4 in einer Perspektivansicht sowie in einer Draufsicht auf eine Stirnfläche der Tauscher-Anordnung 4 gezeigt. Man erkennt eine aus einzelnen Zylindersegmenten ZS1, ZS2 zusammengesetzte Tauscher-Anordnung 4. Die beiden Zylindersegmente ZS1 und ZS2 stellen jeweils einen in Umfangsrichtung gemessenen 90°-Abschnitt eines Hohlzylinders dar. Man erkennt Kreuzstrombereich KS1 und KS2, die an der vorderen bzw. hinteren Stirnseite der Zylindersegmente ZS1 und ZS2 angeordnet sind. Der Kreuzstrombereich KS1 bildet einen Fluid-Eintrittsbereich für das erste Fluid F1 und einen Fluid-Austrittsbereich für das zweite Fluid F2. Der Kreuzstrombereich KS2 bildet einen Fluid-Eintrittsbereich für das zweite Fluid F2 und einen Fluid-Austrittsbereich für das erste Fluid F1. Zwischen dem ersten Kreuzstrombereich KS1 und dem zweiten Kreuzstrombereich KS2 erstreckt sich entlang der Strömungsrichtung der die Tauscher-Anordnung durchströmenden beiden Fluide ein **axialer Gegenstrombereich,** in welchem das erste Fluid F1 und das zweite Fluid F2 entgegengesetzt zueinander parallel zur Axialrichtung A der Zylindersegmente ZS1, ZS2 strömt. Es können auch Zylindersegmente mit einem anderen Winkelabschnitt entlang der Umfangsrichtung verwendet werden. Insbesondere können anstelle der 90°-Zylindersegmente ZS1 und ZS2 oder in Kombination mit diesen auch 45°-Zylindersegmente (nicht gezeigt) verwendet werden, um eine aus einzelnen Zylindersegmenten zusammengesetzte Tauscher-Anordnung 4 zu bilden.

In **Fig. 1, Fig. 2****,** **Fig. 3** **und** **Fig. 4** erkennt man jeweils lokale Tauscher-Elemente E₁, E₂, E₃, E₄, E₅, ...Eₙ aus welchen die jeweilige Tauscher-Anordnung 1, 2, 3, 4 zusammengesetzt ist. Ein lokales Tauscher-Element E₁, E₂, E₃, E₄, E₅, ...Eₙ enthält dabei jeweils einen ersten lokalen Kammerbereich (K₁), der von dem ersten Fluid F1 von einem ersten lokalen Fluid-Eintrittsbereich zu einem ersten lokalen Fluid-Austrittsbereich durchströmbar ist, und einen zweiten lokalen Kammerbereich (K₂), der von dem zweiten Fluid F2 von einem zweiten lokalen Fluid-Eintrittsbereich zu einem zweiten lokalen Fluid-Austrittsbereich durchströmbar ist.

## Patentansprüche

1. Tauscher-Anordnung (1; 2; 3), insbesondere für eine Fahrgastkabine eines Fahrzeugs, eines Flugzeugs, eines Schiffs, einer Seilbahn oder eines Aufzugs, insbesondere mit Elektroantrieb oder mit Hybridantrieb oder mit Segelantrieb, Wärmetransport und/oder selektiven Stofftransport zwischen einem ersten Fluid und einem zweiten Fluid, welche die Anordnung durchströmen können, wobei die Tauscher-Anordnung zumindest in Teilbereichen die Form eines Zylinders oder eines Segments davon oder die Form eines Prismas mit polygonaler Grundfläche oder eines Segments davon hat und aus einer Vielzahl (n) von aneinander angrenzenden lokalen Tauscher-Elementen (E₁, E₂,... , Eₙ) aufgebaut ist, die zumindest in Teilbereichen der Tauscher-Anordnung, in welchen die Anordnung die Form eines Zylinders oder eines Segments davon oder die Form eines Prismas mit polygonaler Grundfläche oder eines Segments davon hat, keilförmig ausgebildet sind und räumlich jeweils begrenzt werden von einer ersten Keilfläche und einer davon beabstandeten und dazu geneigten zweiten Keilfläche, einer ersten Seitenfläche und einer davon beabstandeten zweiten Seitenfläche sowie einer ersten Stirnfläche und einer davon beabstandeten zweiten Stirnfläche, welche grosser als die erste Stirnfläche ist, wobei die aneinander angrenzenden lokalen Tauscher-Elemente (E₁, E₂, ... , Eₙ) keilförmige Volumenelemente sind,
**dadurch gekennzeichnet, dass**
ein erster Fluid-Eintrittsbereich sowie ein zweiter Fluid-Austrittsbereich an der ersten Stirnfläche angeordnet sind und ein zweiter Fluid-Eintrittsbereich sowie ein erster Fluid-Austrittsbereich an der zweiten Stirnfläche angeordnet sind,
oder, dass ein erster Fluid-Eintrittsbereich sowie ein zweiter Fluid-Austrittsbereich an der ersten Seitenfläche angeordnet sind und ein zweiter Fluid-Eintrittsbereich sowie ein erster Fluid-Austrittsbereich an der zweiten Seitenfläche angeordnet sind.

2. Tauscher-Anordnung nach Anspruch 1, **dadurch gekennzeichnet, dass** die Anordnung einen Gegenstrombereich aufweist.

3. Tauscher-Anordnung nach einem der Ansprüche 1 oder 2, **dadurch gekennzeichnet, dass** die Anordnung im Gegenstrombereich die Form eines Zylinders oder eines Segments davon oder die Form eines Prismas mit polygonaler Grundfläche oder eines Segments davon hat.

4. Tauscher-Anordnung nach Anspruch 3, **dadurch gekennzeichnet, dass** der Gegenstrombereich von dem ersten Fluid in einer ersten radialen Richtung und von dem zweiten Fluid in einer zweiten radialen Richtung durchströmbar ist.

5. Tauscher-Anordnung nach einem der vorhergehenden Ansprüche, **dadurch gekennzeichnet, dass** der erste Fluid-Eintrittsbereich und der zweite Fluid-Austrittsbereich als ein erster Kreuzstrombereich (KS1) ausgebildet sind und der zweite Fluid-Eintrittsbereich und der erste Fluid-Austrittsbereich als ein zweiter Kreuzstrombereich (KS2) ausgebildet sind.

6. Tauscher-Anordnung nach Anspruch 1, **dadurch gekennzeichnet, dass** das Zylindersegment oder das Prismensegment räumlich durch mindestens eine Schnittebene begrenzt ist, welche parallel zur Längsachse eines Zylinders bzw. eines Prismas verläuft
und/oder
dass das Zylindersegment oder das Prismensegment räumlich durch mindestens eine Zylindermantelfläche begrenzt ist, deren Erzeugende parallel zur Längsachse eines Zylinders bzw. eines Prismas verläuft und/oder
dass das Zylindersegment oder das Prismensegment räumlich durch mindestens eine Polygonmantelfläche begrenzt ist, deren Mantelebenen parallel zur Längsachse eines Zylinders bzw. eines Prismas verlaufen.

## Claims

1. Exchanger arrangement (1; 2; 3), in particular for a passenger cabin of a vehicle, of an aircraft, of a ship, of a cable car or of a lift, in particular with electric drive or with hybrid drive or with sail propulsion, heat transfer and/or selective mass transfer between a first fluid and a second fluid that are able to flow through the arrangement, wherein the exchanger arrangement has, at least in sub-regions, the shape of a cylinder or of a segment thereof or the shape of a prism with a polygonal base or of a segment thereof and is constructed from a multiplicity (n) of local exchanger elements (E₁, E₂, ..., Eₙ) which adjoin one another and which, at least in sub-regions of the exchanger arrangement in which the arrangement has the shape of a cylinder or of a segment thereof or the shape of a prism with a polygonal base or of a segment thereof, are of wedge-shaped form and are each delimited spatially by a first wedge surface and a second wedge surface spaced apart therefrom and inclined in relation thereto, by a first side surface and a second side surface spaced apart therefrom, and by a first end surface and a second end surface spaced apart therefrom, which second end surface is bigger than the first end surface, wherein the local exchanger elements (E₁, E₂, ..., Eₙ) adjoining one another are wedge-shaped volume elements,
**characterized in that**
a first fluid entry region and a second fluid exit region are arranged on the first end surface, and a second fluid entry region and a first fluid exit region are arranged on the second end surface,
or **in that** a first fluid entry region and a second fluid exit region are arranged on the first side surface, and a second fluid entry region and a first fluid exit region are arranged on the second side surface.

2. Exchanger arrangement according to Claim 1, **characterized in that** the arrangement has a counterflow region.

3. Exchanger arrangement according to either of Claims 1 and 2, **characterized in that**, in the counterflow region, the arrangement has the shape of a cylinder or of a segment thereof or the shape of a prism with a polygonal base or of a segment thereof.

4. Exchanger arrangement according to Claim 3, **characterized in that** the counterflow region is able to be flowed through by the first fluid in a first radial direction and by the second fluid in a second radial direction.

5. Exchanger arrangement according to one of the preceding claims, **characterized in that** the first fluid entry region and the second fluid exit region are in the form of a first crossflow region (KS1), and the second fluid entry region and the first fluid exit region are in the form of a second crossflow region (KS2).

6. Exchanger arrangement according to Claim 1, **characterized in that** the cylinder segment or the prism segment is delimited spatially by at least one section plane which extends parallel to the longitudinal axis of a cylinder or of a prism,
and/or
**in that** the cylinder segment or the prism segment is delimited spatially by at least one cylinder lateral surface whose generatrix extends parallel to the longitudinal axis of a cylinder or of a prism, and/or
**in that** the cylinder segment or the prism segment is delimited spatially by at least one polygonal lateral surface whose lateral planes extend parallel to the longitudinal axis of a cylinder or of a prism.

## Revendications

1. Ensemble échangeur (1 ; 2 ; 3), destiné en particulier à une cabine de passagers d'un véhicule, d'un avion, d'un bateau, d'un téléphérique ou d'un ascenseur, en particulier à propulsion électrique ou à propulsion hybride ou à propulsion par voiles, transport de chaleur et/ou transport de matière sélective entre un premier fluide et un deuxième fluide qui peuvent s'écouler à travers l'ensemble, l'ensemble échangeur ayant, au moins dans certaines zones, la forme d'un cylindre ou d'un segment de celui-ci ou la forme d'un prisme à base polygonale ou d'un segment de celui-ci et consiste en un grand nombre (n) d'éléments échangeurs locaux adjacents (E₁, E₂, ..., Eₙ) qui sont conçus en forme de coin au moins dans certaines zones de l'ensemble échangeur, dans lesquelles l'ensemble a la forme d'un cylindre ou d'un segment de celui-ci ou la forme d'un prisme à base polygonale ou d'un segment de celui-ci, et qui sont chacun délimités dans l'espace par une première surface de coin et une deuxième surface de coin espacée de celle-ci et inclinée par rapport à celle-ci, une première surface latérale et une deuxième surface latérale espacées de celle-ci, ainsi qu'une première surface frontale et une deuxième surface frontale espacée de celle-ci, qui est plus grande que la première surface frontale, les éléments échangeurs locaux adjacents (E₁, E₂, ..., Eₙ) étant des éléments de volume en forme de coin,
**caractérisé en ce que**
une première zone d'entrée de fluide et une deuxième zone de sortie de fluide sont disposées au niveau de la première surface frontale et une deuxième zone d'entrée de fluide et une première zone de sortie de fluide sont disposées au niveau de la deuxième surface frontale,
ou une première zone d'entrée de fluide et une deuxième zone de sortie de fluide sont disposées au niveau de la première surface latérale et une deuxième zone d'entrée de fluide et une première zone de sortie de fluide sont disposées au niveau de la deuxième surface latérale.

2. Ensemble échangeur selon la revendication 1, **caractérisé en ce que** l'ensemble comporte une zone à contre-courant.

3. Ensemble échangeur selon l'une des revendications 1 et 2, **caractérisé en ce que** l'ensemble dans la zone à contre-courant a la forme d'un cylindre ou d'un segment de celui-ci ou la forme d'un prisme à base polygonale ou d'un segment de celui-ci.

4. Ensemble échangeur selon la revendication 3, **caractérisé en ce que** la zone à contre-courant peut être traversée par le premier fluide dans une première direction radiale et par le deuxième fluide dans une deuxième direction radiale.

5. Ensemble échangeur selon l'une des revendications précédentes, **caractérisé en ce que** la première zone d'entrée de fluide et la deuxième zone de sortie de fluide sont conçues comme une première zone de courants croisés (KS1) et la deuxième zone d'entrée de fluide et la première zone de sortie de fluide sont conçues comme une deuxième zone de courants croisés (KS2).

6. Ensemble échangeur selon la revendication 1, **caractérisé en ce que**
le segment de cylindre ou le segment de prisme est délimité dans l'espace par au moins un plan de coupe qui s'étend parallèlement à l'axe longitudinal d'un cylindre ou d'un prisme
et/ou
le segment de cylindre ou le segment de prisme est délimité dans l'espace par au moins une surface latérale de cylindre dont la génératrice s'étend parallèlement à l'axe longitudinal d'un cylindre ou d'un prisme et/ou le segment de cylindre ou le segment de prisme est délimité dans l'espace par au moins une surface latérale polygonale dont les plans latéraux sont parallèles à l'axe longitudinal d'un cylindre ou d'un prisme.
